# EUROPEAN PATENT SPECIFICATION

(11) **EP 2 798 928 B1**
(45) Date of publication and mention of the grant of the patent: **07.02.2024**
(21) Application number: 13165699.3
(22) Date of filing: 29.04.2013
(51) Int. Cl.: A01B 69/00, G01C 21/36, G05D 1/02

(54) **OPERATING SYSTEM FOR AND METHOD OF OPERATING AN AUTOMATIC GUIDANCE SYSTEM OF AN AGRICULTURAL VEHICLE**
BETRIEBSSYSTEM FÜR, UND VERFAHREN ZUM BETRIEB EINES AUTOMATISCHEN LENKSYSTEMS EINES LANDWIRTSCHAFTLICHEN FAHRZEUGS
SYSTÈME D'OPERATION ET PROCÉDÉ PERMETTANT DE FAIRE FONCTIONNER UN SYSTÈME DE GUIDAGE AUTOMATIQUE D'UN VÉHICULE AGRICOLE

(43) Date of publication of application: 05.11.2014
(73) Proprietor: CLAAS E-Systems GmbH, 49201 Dissen am Teutoburger Wald (DE)
(72) Inventor: Madsen, Ertbolle Madsen, 2830 Virum (DK); Amhild, Kim, 2200 Copenhagen N (DK); Steen, Sören, 2980 Kokkedal (DK)
(74) Representative: Budach, Steffen

(56) References cited:
- WO-A1-2006/132522
- WO-A2-2008/135978
- DE-A1-102006 055 858
- US-B1- 6 285 930

## Description

### Technical field

The present invention relates to an operating system for operating an automatic guidance system of an agricultural vehicle. The invention further relates to an agricultural vehicle comprising an operating system for operating an automatic guidance system, and to a method of operating an automatic guidance system of an agricultural vehicle.

### Background of the invention

An agricultural vehicle, such as a tractor, a combine or a forage harvester, is often used in a way that while driving the agricultural vehicle an operator needs to control several tasks, for example filling grain in a tank, controlling the settings of a sprayer or a plow.

In order to relieve the operator, automatic steering devices have been developed, for example based on a camera system. EP 2 094 073 A1 discloses a method by which image data from the terrain lying in front of a vehicle in the direction of travel are detected, and from which data steering commands to influence the direction and/or the speed of travel are generated, wherein prominent objects are selected by means of the image data, the distance between the agricultural vehicle and the prominent objects is determined, and the steering commands are generated from the image data which correspond to the objects and from the changes of distance between the vehicle and the objects.

This device has the drawback, that the operator needs to monitor the device closely, because for example due to a miss-interpretation of the image data the device may not work properly, in which case the operator needs to take over the steering manually, thus increasing the workload for the operator. Other state of the art operating systems for automatically steering a vehicle are known from US 6 285 930 B1 and WO 2008/135978 A2.

### Summary of the invention

It is therefore an object of the present invention to provide an operating system for a automatic guidance system of an agricultural vehicle, which improves the operating of the automatic guidance system by reducing the workload of the operator. A further object of the present invention is to provide a method for operating an automatic guidance system of an agricultural vehicle, which improves the operation of the automatic guidance system.

This object is solved by means of an operating system for operating an automatic guidance system of an agricultural vehicle having the features of claim 1 and by a method of interactively operating an automatic guidance system of an agricultural vehicle having the features of claim 9. Preferred embodiments, additional details, features, characteristics and advantages of the object of the invention of said operating system and said method are disclosed in the subclaims.

In a general aspect of the invention, an operating system for operating an automatic guidance system of an agricultural vehicle comprises at least one three-dimensional imaging device for capturing a real object and for deriving a three-dimensional data set for the real object, and a touch-sensitive display unit for displaying an object and for receiving a touch input. According to the invention, the operating system is configured for generating three-dimensional data set based command signals corresponding to the interaction with the displayed object for operating the automatic guidance system, whereby the interaction with the displayed object is initiated by manipulating the displayed object by hand, in particular with at least one finger by touch input.

An agricultural vehicle may be a combine harvester, a forage harvester, a transport vehicle, a tractor and/or a powered and/or steerable trailer. The operating system for operating an automatic guidance system may be located on an agricultural vehicle with a transfer device or on another agricultural vehicle, for example a tractor pulling a trailer or a steerable trailer. The transfer device may be an auger of a combine harvester or a spout of a forage harvester. The automatic guidance system may be, in particular a three-dimensional imaging device based, automatic steering system or autopilot. The automatic guidance system may comprise a navigation system and/or a route planning system, for example for determining an optimal route to pick up bales on a filed. The agricultural vehicle may comprise a control unit for controlling the agricultural vehicle, in particular actuators moving a steering system, a throttle and/or brakes of the agricultural vehicle, wherein the control unit may be configured to generate control signals to move the agricultural vehicle, for example by controlling the steering system, the throttle and/or the brakes, in a desired position.

The operating system comprises at least one three-dimensional imaging device for capturing real objects in the real world in order to generate a displayable two-dimensional image to interact with. On capturing the real object, the three-dimensional imaging device, in particular a processing unit of the three-dimensional imaging device, may derive a three-dimensional data set and/or a three-dimensional range image for the captured real object, for example the surroundings of the agricultural vehicle, wherein a distance for each pixel of the three-dimensional imaging device may be calculated, wherein the distance information may relate to an absolute distance and/or a relative distance. The three-dimensional imaging device may capture real objects in real time. A real object may also be an object located in the surroundings of the agricultural vehicle. A real object may be another agricultural vehicle, tracks on the ground and/or an obstacle. An obstacle may be a tree, a fence or a geological area, for example a pond, a trench, soft and/or wet soil, a bank or an acclivity. The derived three-dimensional data set may comprise distance information and/or three-dimensional coordinates of the real object. The distance information may be relative to the operating system and/or the agricultural vehicle and/or absolute, for example as three-dimensional coordinates. The absolute distance information may be generated together with a navigation system, in particular with a satellite based navigation system, for example the global positioning system (GPS). The navigation system may provide three-dimensional coordinates, in particular for the three-dimensional imaging system and/or the agricultural vehicle, based on which the three-dimensional coordinates of the real object may be calculated by determining the position, for example distance and bearing, of the real object relative to the three-dimensional imaging device and/or the agricultural vehicle.

The captured real object may be visualised for displaying on a display unit, for example in form of a range image. The visualisation of the captured object may be in form of a live image and/or live video or in form of an artificial video and/or artificial image suitable for visualising the captured distance information to an operator of the operating system. For each visualised, and in particular displayed, pixel on the display unit a corresponding distance information may be calculated. A pixel of the three-dimensional imaging device may be the smallest capturable point of the image resolution of the imaging device, wherein a pixel of the display unit may be the smallest addressable element of the display unit. The resolution of the three-dimensional imaging device may be higher than the resolution of the display unit, wherein the three-dimensional data set may correspond to the higher resolution of the three-dimensional imaging device.

The display unit may be a multifunctional display unit configured to receive touch input, in particular multi touch input, for example up to and including multi touch input with five fingers. The multifunctional display may comprise several subareas, for example in form of a split screen, for independently displaying information and independently receiving touch input. The multifunctional display may comprise additional input elements like buttons and/or wheels. The display unit may receive data from the three-dimensional imaging device for displaying for example a captured and visualised real object and/or a virtual element. Objects, for example in form of a live video of a real object or in form of a virtual element, displayed on the display unit are displayed objects, wherein a three-dimensional data set corresponds to each, in particular captured and/or visualised, displayed object. Displayed objects may be enlarged on the display unit, for example by executing an according input gesture.

The display unit displays the captured and visualised objects and may receive and/or detect feedback in form of touch input, in particular corresponding to a displayed object, wherein the touch input may be received in form of detected two-dimensional coordinates relating to the executed touch input, in particular to the executed input gesture. The touch input may be in form of several different input gestures, wherein the response of the operating system to the different input gestures may be predefined. The displayed object may be interacted with by touch input.

According to the invention the interaction with the displayed object is by manipulating the displayed object by hand, in particular with at least one finger by touch input. The displayed object may for example be selected, moved and/or altered in shape and/or size. An interaction may be displayed on the display unit in real time, thus allowing for an interactive manipulation of the displayed object.

The received touch input, a manipulation of the displayed object, may be transmitted to the imaging device, for example in form of the two-dimensional coordinates. The imaging device, in particular the processing unit of the three-dimensional imaging device, may allocate the received feedback, e.g. two-dimensional coordinates of the touch input, to the displayed object displayed at those coordinates. The three-dimensional imaging device may evaluate the received feedback and correlate the feedback to the corresponding displayed object and the related three-dimensional data set. The three-dimensional imaging device may generate three-dimensional data set based command signals corresponding to the received two-dimensional touch input. The commands signals may be received by the control unit of the automatic guidance system as input signals for operating the automatic guidance system accordingly, for example by operating the steering system of the agricultural vehicle accordingly. The command signals may comprise position information of real objects, which may be necessary as input for the control unit in order to correctly control, for example steer, accelerate and/or decelerate, the agricultural vehicle. The displayed object is interactively manipulable, wherein a two-dimensional manipulation of the displayed object corresponds to the generating of three-dimensional control commands. The control commands may, for example, be transmitted to the control unit of the transfer device in order to control the agricultural vehicle as desired, for example in order to keep the vehicle in line with a swath or tracks.

The generating of three-dimensional data set based command signals corresponding to an interaction with the displayed object for operating the transfer device has the advantage, that the operator may manually interact with visual information provided by the three-dimensional imaging device. The visual information enables the operator to supervise the automatic guidance system and the manipulation of the displayed objects allows for a direct interaction, for example realigning a displayed object indicating a track to follow, if an adjustment or other input is necessary. Thus, the operating system allows for an easy and efficient way to operate the automatic guidance system, reducing the stress and workload for the operator.

In a preferred embodiment of the invention the operating system is further configured for generating command signals in form of control signals for directly controlling the agricultural vehicle. The three-dimensional imaging device may be directly linked to actuators moving the steering system, in order to control the agricultural vehicle directly. The command signals generated by the imaging device, in particular based on received touch input feedback, may be control signals, which are directly controlling the actuators of the steering system, the throttle and/or the brakes of the agricultural vehicle. For example, a displayed object indicative of the tracks that the agricultural vehicle is to follow, may be selected and moved or altered by touch input, wherein a movement and/or alteration of the displayed object by touch input may lead to a directly linked movement of the steering system of the agricultural vehicle. This has the advantage, that the agricultural vehicle may be controlled directly by the three-dimensional imaging device, which allows for a faster response of the steering system for example to touch input by the operator on the display unit. In addition, the direct interaction with the displayed object for operating the operating system improves the ease of handling of the system further.

Preferably the operating system is further configured for recognising a captured real object. The operating system may comprise a memory unit for storing reference data corresponding to real objects. The captured real object, in particular the derived three-dimensional data set corresponding to the real object, may be compared to predefined reference data in order to enable a recognition of a real object, for example if it is a bale and/or if it is a round or square bale. If a captured real object is recognised, corresponding object data, for example the dimensions of the real object like length, height and/or width, may be allocated to the real object and/or displayed object and may be provided for the automatic guidance system. The object data may comprise information about the size of a pond or the length of a row of trees for example. The object data may be pre-stored on the memory unit. This has the advantage, that precise data about the real object is efficiently made available, thus, increasing the precision of the automatic guidance system without increasing the workload of the operator.

In a further preferred embodiment the operating system is further configured for allocating and/or changing data corresponding to a displayed object. The captured real object, in particular the derived three-dimensional data set corresponding to the real object, may be compared to predefined reference data in order to enable a recognition of a real object, for example if it is a round bale. In case a captured real object, that is shown as a displayed object on the display unit, has not been recognised, the operator may allocate object data, for example retrieved from the memory unit, to the displayed object corresponding to the real object. For example may the dimension and location of a known and stored pond be allocated to the displayed object, i.e. pond, in order to enable the automatic guidance system, in particular the navigation system of the automatic guidance system, to guide the agricultural vehicle safely around this obstacle. This has the advantage, that the operator may enable the automatic guidance system to safely guide the agricultural vehicle with a minimum of interaction with the operating system. A displayed object may also be generated and displayed for a real object whose position, for example in form of three-dimensional coordinates, has been transmitted to the operating system. The position of the real object may be transmitted together with an identifier for identifying for example the type of object. The position, and in particular identifier, of the real object may be transmitted to the operating system by another agricultural vehicle. The object data corresponding to the real object whose position, and in particular identifier, has been transmitted to the operating system may be retrieved from the memory unit in order to reduce the data that needs to be transmitted. Such a real object may for example be another agricultural vehicle, tracks on the ground and/or an obstacle. An obstacle may be a tree, a fence or a geological area, for example a pond, a trench, soft and/or wet soil, a bank or an acclivity. The displayed object may be corrected by the operator by interacting with the displayed object on the touch screen. To any displayed object, for example a position on the displayed surroundings of the agricultural vehicle, data may be allocated. For example may the operator select, by input gesture on the display unit, a point of interest, for example a point of return when interrupting his work. In this case the two-dimensional input is transferred into a three-dimensional position information which may be used by the automatic guidance system to guide the agricultural vehicle to the selected point of interest. Also, the operator may select a point-of-interest in the two-dimensional display, which is the transferred into a three-dimensional position information or coordinate, ordering the automatic guidance system, for example by input gesture, to automatically guide the agricultural vehicle to the desired position. The object data may be changed, for example, in case the real object has been wrongly recognised or alterations to the object data, for example the dimensions of an obstacle, are necessary. The allocation and/or changing of data corresponding to a displayed object may be executed by touch input, in particular by an input gesture, on the display unit, in particular by altering the displayed object. This has the advantage, that the operator may easily and more efficiently operate the automatic guidance system, reducing the workload for the operator.

In a more preferred embodiment of the invention the operating system is further configured for generating a visual and/or audible feedback, in particular to a touch input. A touch input, for example for selecting and/or manipulating a displayed object, may cause an audible and/or visual feedback in order to indicate to the operator the execution of the desired action. The audible and/or visible feedback may be given by a visual indication on the display unit, an indicator light and/or a audible signal like a tone or a message. This has the advantage, that the operator gets a distinct feedback to his input.

Preferably, the operating system is further configured for generating at least one virtual element corresponding to a displayed object. The virtual element may be generated by the three-dimensional imaging device and may be displayed on the display unit, for example laying over a displayed real object. The virtual element may be interactively manipulable by touch input. A displayed object may be a displayed real object, for example as a live image and/or video, and/or a virtual element. A virtual element may be generated according to a recognised and/or displayed real object, for example in form of an artificial image of the real object, a symbol, or graphical elements. The object data corresponding to the displayed real object may, for example, comprise information about the dimensions of the real object, for example a pond or a round bale, and/or information about for example security distances indicating how close to an obstacle the agricultural vehicle may be driven. A virtual element representing security distances in headland prediction or around an obstacle or borders of a field may be shown as displayed objects, virtual elements, laid over a live image of the real object, i.e. the field. The object data may be changed, for example, in case the real object has been wrongly recognised or alterations to the object data are necessary, by interacting with the virtual element. For example, security distances of the headland prediction or around an obstacle may be altered by selecting and moving them by touch input, widening or narrowing the safety distance, thus generating command signals for the control unit, allowing the automatic guidance system to guide the agricultural vehicle accordingly. The advantage of a virtual element is an increase in information that may be shown to the operator without increasing the workload. Additionally further interactions can be incorporated into the operating system, enhancing the input options for the operator.

In a preferred embodiment of the invention the three-dimensional imaging device comprises at least one electro-optical range imaging device, in particular in form of a stereo camera, a light detecting and ranging device and/or a time-of-flight camera. The electro-optical range imaging device may be an active and/or passive range imaging device for generating an interactive two-dimensional image of a captured three-dimensional real world and/or a three-dimensional real object showing for example the distance to individual points in a scene of the real world from the electro-optical range imaging device. The light detection and ranging device, called LIDAR or sometimes LADAR which is short for Laser Imaging Detection and Ranging, is an active optical remote sensing technology that may measure a distance to an object, like the ground or a real object, by illuminating the target with laser light and analyzing the backscattered light. The time-of-flight camera, as an active range imaging device, may resolves distance based on the known speed of light, measuring the time-of-flight of a light signal between the camera and a real object for each point of the image. The three-dimensional imaging device might be radar or ultra-sonic based range imaging device. Different kinds of three-dimensional imaging devices may be combined. A resulting three-dimensional data set may for example be visualised as a corresponding range image, wherein the range image comprises pixel values each corresponding to a distance. The range image may be visualised from the three-dimensional data set by the three-dimensional imaging device in order to provide an image displayable on the display unit for the operator, for example in form of a live image and/or video of the real world and/or object. The stereo camera, as a passive range imaging device, may derive the three-dimensional data set and the corresponding pixel values for a real object directly from the captured image. The range image may be assembled from separate three-dimensional data sets and/or range images, for example in form of a panoramic picture, wherein the individual range images may originate from one or more, even different, three-dimensional imaging devices. This has the advantage, that the field of view may be enlarged.

The invention further relates to an agricultural vehicle comprising at least one operating system as described above. The inventive operating system allows for an easy and efficient way to operate the automatic guidance system, reducing the stress and workload for the operator.

A further aspect of the present invention is a method of interactively operating, in particular by means of an operating system as described above, an automatic guidance system of an agricultural vehicle, comprising the steps of
- deriving a three-dimensional data set for a real object captured by a three-dimensional imaging device,
- displaying an object on the touch-sensitive display unit,
- receiving feedback from the display unit from touch input interaction with the displayed object,
- generating three-dimensional data set based command signals corresponding to the interaction with the displayed object for operating the automatic guidance system.

A three-dimensional imaging device may capture an image of a real object in the real world for deriving a three-dimensional data set for the captured real object. The three-dimensional data set may comprise information, in particular position information, about the distance of the real object to the imaging device and/or the agricultural vehicle. The automatic guidance system may be, in particular a three-dimensional imaging device based, automatic steering system or autopilot. The automatic guidance system may comprise a navigation system and/or a route planning system, for example for determining a route to pick up detected bales on a filed. The automatic guidance system may comprise a control unit for controlling the agricultural vehicle, in particular actuators moving a steering system, a throttle and/or brakes of the agricultural vehicle, wherein the control unit may be configured to generate control signals to move the agricultural vehicle, for example by controlling the steering system, the throttle and/or the brakes, in a desired position. Each pixel of the captured image of the imaging device may comprise a distance information from the real object to the imaging device. The three-dimensional data set may comprise relative and/or absolute position information and/or three-dimensional coordinates. The three-dimensional coordinates may be generated by support of a navigation system, in particular a satellite based navigation system, for example the global positioning system (GPS). The navigation system may provide three-dimensional coordinates, in particular for the three-dimensional imaging system and/or the agricultural vehicle, based on which the three-dimensional coordinates of the real object may be calculated by determining the position, for example distance and bearing, of the real object relative to the three-dimensional imaging device and/or the agricultural vehicle. Visualising the captured real object may provide a displayable image of the image captured by the imaging device. The visualisation of the real object may be in form of a live and/or an artificial image and/or video of the real object. This allows for a presentation of the three-dimensional information that may easily be absorbed by an operator of the agricultural vehicle operating the automatic guidance system. For displaying the visualised captured real object, information may be transmitted from the imaging device to a touch sensitive display unit. The visualised captured real object may be displayed as a displayed object on the display unit, wherein several objects may be displayed in one or more subareas of the display unit separately and/or together. The display unit may be sensitive to multi touch input, in particular for each subarea and/or displayed object.

A displayed object may be interacted with by touching the touch sensitive display unit in the area showing the displayed object. The interacting may be in form of selecting the displayed object and/or by manipulating the displayed object, for example its shape and/or dimensions. The touch input is registered as feedback by the display unit in two-dimensional coordinates. The two-dimensional coordinates of the feedback and the interaction with the displayed object are transmitted back to the three-dimensional imaging device, wherein the three-dimensional imaging device correlates the two-dimensional coordinates to the three-dimensional data set corresponding to the displayed object, for example to a three-dimensional coordinates of the real object corresponding to the displayed object. Based on the interaction with the displayed object command signals for operating the automatic guidance system according to the interaction may be generated, based on the three-dimensional data set. The command signals may be transferred as input signals to a control unit controlling the transfer device. The generated command signals may comprise three-dimensional data set based information corresponding to the touch input, for example three-dimensional coordinates of a selected position or an intended movement of the agricultural vehicle to the selected position, which may then be transmitted as input signals to the control unit, which controls automatic guidance system accordingly in order to execute the movement and/or operation of the agricultural vehicle intended by the interaction with the displayed object. For example, a real object like a round bale displayed on the display unit may be marked and the three-dimensional coordinates of the bale stored or transferred to a route planning system. Also a displayed object in form of an obstacle may be selected by touch input and a safety distance may be chosen in order to enable the automatic guidance system to circumnavigate the obstacle safely, wherein the two-dimensional coordinates of the touch input are transmitted to the imaging device, which correlates these two-dimensional coordinates to three-dimensional coordinates based on the three-dimensional data set of the displayed object in form of an obstacle. This three-dimensional coordinate may then be transmitted as input signals to a control unit controlling the transfer device, so that the control unit may guide the agricultural vehicle accordingly.

The generating of three-dimensional data set based command signals corresponding to an interaction with the displayed object for operating the automatic guidance system has the advantage, that the operator may manually interact with visual information provided by the three-dimensional imaging device for operating the automatic guidance system. The visual information enables the operator to efficiently supervise the route following and, for example the automated avoidance of obstacles. Thus, the operating system allows for an easy and efficient way to operate the automatic guidance system, reducing the stress and workload for the operator.

In a preferred embodiment of the invention the method further comprises the step of generating command signals in form of control signals for directly controlling the agricultural vehicle. The three-dimensional imaging device may be directly linked to actuators moving the steering system of the agricultural vehicle, in order to control the agricultural vehicle directly. The command signals generated by the imaging device, in particular based on received touch input feedback, may be control signals, which are directly controlling the actuators of the steering system, the throttle and/or the brakes of the agricultural vehicle. Thus, the interaction with the displayed object by touch input may be directly transferred into control signals for directly controlling at least one actuator of the agricultural vehicle. This has the advantage, that the agricultural vehicle may be controlled directly by the three-dimensional imaging device, which allows for a faster response to touch input by the operator on the display unit. For example, a displayed object indicative of the tracks that the agricultural vehicle is to follow, may be selected and moved or altered by touch input, wherein a movement and/or alteration of the displayed object by touch input may lead to a directly linked movement of the steering system of the agricultural vehicle. This has the advantage, that the agricultural vehicle may be controlled directly by the three-dimensional imaging device, which allows for a faster response of the steering system for example to touch input by the operator on the display unit..

In a more preferred embodiment of the invention the method further comprises the step of recognising a captured real object. A captured real object, in particular the derived three-dimensional data set corresponding to the real object, may be compared to predefined reference data in order to enable a recognition of a real object. The reference data may be pre-stored on a memory unit. When recognising a real object by comparing the derived three-dimensional data set with reference data, corresponding object data may be allocated to the captured real object and provided for controlling the automatic guidance system. The object data may be pre-stored on the memory unit. Object data may, for example, be the precise dimensions of the real object, like height, width, length. This has the advantage, that precise data about the real object, like an obstacle with corresponding safety lines, is efficiently made available for operating the automatic guidance system, thus, increasing the precision of the guidance of the agricultural vehicle without increasing the workload of the operator.

In a much preferred embodiment of the invention the method further comprises the step of storing and/or retrieving reference data, in particular for comparing a derived three-dimensional data set with reference data. Reference data may be retrieved and used for comparing the derived three-dimensional data set from a captured real object with pre-stored data. In case a real object may not be recognised, in particular if no reference data is available, the derived three-dimensional data set of the captured unrecognised real object may be stored, for example in the memory unit, as reference data. This could be the case if a new obstacle is detected, like a pond. The stored reference data may be complemented with further, more precise information about the real object, like the dimensions of the obstacle and safety distances to be considered. This has the advantage, that an unrecognised real object, like an obstacle, may only need to be stored once in order to automatically recognise it afterwards, thus, reducing the workload for the operator.

In a further preferred embodiment of the invention the method further comprises the step of allocating and/or changing data corresponding to a displayed object. The data corresponding to a displayed object may be a three-dimensional data set, object data and/or reference data. In case a captured real object, that is shown as a displayed object, has not been recognised, object data may be allocated to the displayed object by the operator. The allocated object data may, for example, be retrieved from the memory unit, for example standard safety distances to be considered from known types of obstacles like tree lines. In case a captured real object, that is shown as a displayed object, has not been recognised correctly, the object data allocated to the displayed object may be change by the operator, for example by retrieving the correct object data from the memory unit and/or by altering the object data, for example by touch input, on the display unit. A displayed object may also be generated and displayed for a real object whose position, for example in form of three-dimensional coordinates, has been transmitted to the operating system. The position of the real object may be transmitted together with an identifier for identifying for example the type of object. The position, and in particular identifier, of the real object may be transmitted to the operating system by another agricultural vehicle. The object data corresponding to the real object whose position, and in particular identifier, has been transmitted to the operating system may be retrieved from the memory unit in order to reduce the data that needs to be transmitted. Such a real object may for example be another agricultural vehicle, tracks on the ground and/or an obstacle. An obstacle may be a tree, a fence or a geological area, for example a pond, a trench, soft and/or wet soil, a bank or an acclivity. The displayed object, for example the displayed size of an obstacle, may be corrected by the operator by interacting with the displayed object on the touch screen. Another agricultural vehicle may displayed for example as a collision warning to the operator. This has the advantage, that the guidance of the agricultural vehicle may be more efficient due to more precise data and more information visualised for the operator..

Preferably the method further comprises the step of generating a visual and/or audible feedback, in particular to a touch input. Interacting with the displayed object, in particular by touch input, may be supported by audio and/or visual feedback in order to indicate the execution of the desired action. The audible and/or visible feedback may be given by a visual indication on the display unit, an indicator light and/or a audible signal like a tone or a message. This has the advantage, that the operator gets a distinct feedback to his input.

In a preferred embodiment of the invention the method further comprises the step of generating at least one virtual element corresponding to a displayed object. The virtual element may be generated by the three-dimensional imaging device and may be displayed on the display unit. The virtual element may be laid over the visualised real object. The virtual element may be interactively manipulable by touch input. A displayed object may be a real object, for example displayed as a live image and/or video, and/or a virtual element. The virtual element may be generated according to a displayed and/or recognised real object, for example in form of an artificial image of the real object, a symbol, or graphical elements. For generating a virtual element, object data corresponding to the displayed and recognised real object may be incorporated, for example by incorporating object information into the virtual element, like an indication of the security distances indicating how close to an obstacle the agricultural vehicle may be guided i.e. driven. A virtual element representing security distances of an obstacle may be shown as a displayed object, in form of virtual elements, laid over a live image of the obstacle. The interaction with the displayed object, for example in form of a virtual element, may be transferred into three-dimensional data set based command signals, for example by transmitting the altered security distances in form of, in particular relative, three-dimensional coordinates to the control unit, thus enabling the control unit to move and operate the agricultural vehicle according to the new security distances. The advantage of a virtual element is an increase in information that may be shown to the operator without increasing the workload. Additionally further interactions can be incorporated into the operating system, enhancing the input options for the operator.

In a preferred embodiment of the invention the method further comprises the step of selecting a displayed object for tracking the corresponding real object. A displayed object may be selected by touch input, wherein the generated three-dimensional data set and three-dimensional coordinates may be used for closing and/or avoiding the chosen real object and/or for tracking the selected real object, constantly updating the three-dimensional coordinates of the real object. This has the advantage, that an obstacle, for example a person, may be easily selected and avoided by the automatic guidance system.

In a preferred embodiment of the invention the method further comprises the step of transferring three-dimensional data sets to a further system. The three-dimensional data sets of the automatic guidance system may be transferred to another system, for example a navigation and/or route planning system of the agricultural vehicle or an external system. Transferring for example three-dimensional data sets comprising information about the three-dimensional coordinates of round bales, that have been detected by the three-dimensional imaging system, may enable a route planning system to derive a route for picking up the round bales. The agricultural vehicle may then be automatically guided along this route by an automatic guidance system according to the invention.

The afore mentioned components, as well as the claimed components and the components to be used in accordance with the invention in the described embodiments, are not subject to any special exceptions with respect to their size, shape, material selection and technical concept such that the selection criteria known in the pursuant field can be applied without a limitation.

### Brief description of the drawings

Additional details, features, characteristics and advantages of the object of the invention are disclosed in the figures and the following description of the respective figures, which - in exemplary fashion - show one embodiment and examples of an operating system and a method of operating according to the invention.

In the drawings:
- Fig. 1:: illustrates a schematic view of agricultural vehicles with an operating system according to the invention;
- Fig. 2:: shows a schematic view of an operating system according to the invention;
- Fig. 3:: illustrates the interacting with a displayed obstacle; and
- Fig. 4:: illustrates the interacting with a virtual element.

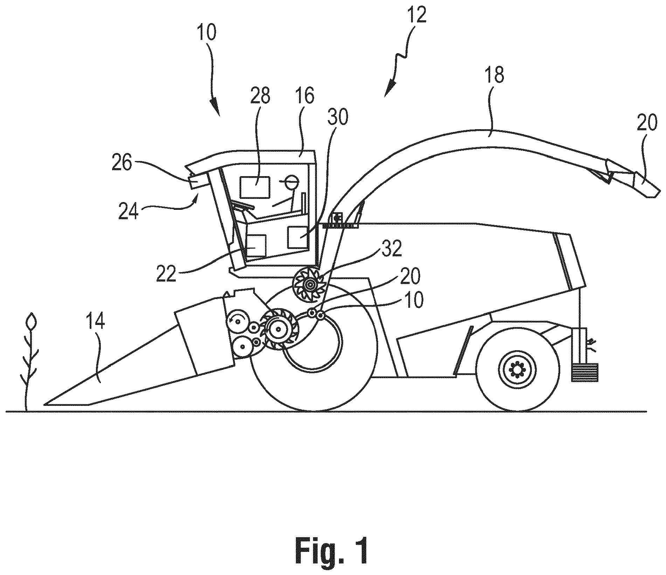

Fig. 1 illustrates a schematic view of an operating system 10 mounted on an agricultural vehicle 12 in form of a forage harvester, comprising a header 14, a cabin 16 and a controllable transfer device 18 with a controllable flap 20 at its free end. During operation the harvested goods are processed by the harvester 12 and ejected through the transfer device 18. The agricultural vehicle 12 comprises an automatic guidance system 22, for example for keeping the agricultural vehicle automatically on track during harvesting. A three-dimensional imaging device 24 with an electro-optical range imaging device in form of a stereo camera 26 for capturing real objects, like harvest, is attached to the front of the agricultural vehicle 12. The three-dimensional imaging device 24 is overlooking and capturing at least part of the surroundings of the agricultural vehicle 12. The three-dimensional imaging device 24 is connected to a touch sensitive display unit 28 for displaying a visualised image of the real object captured by the stereo camera 26. The automatic guidance system 22 is connected to the operating system 10 and a control unit 30 of the agricultural vehicle 12, configured to receive command signals.

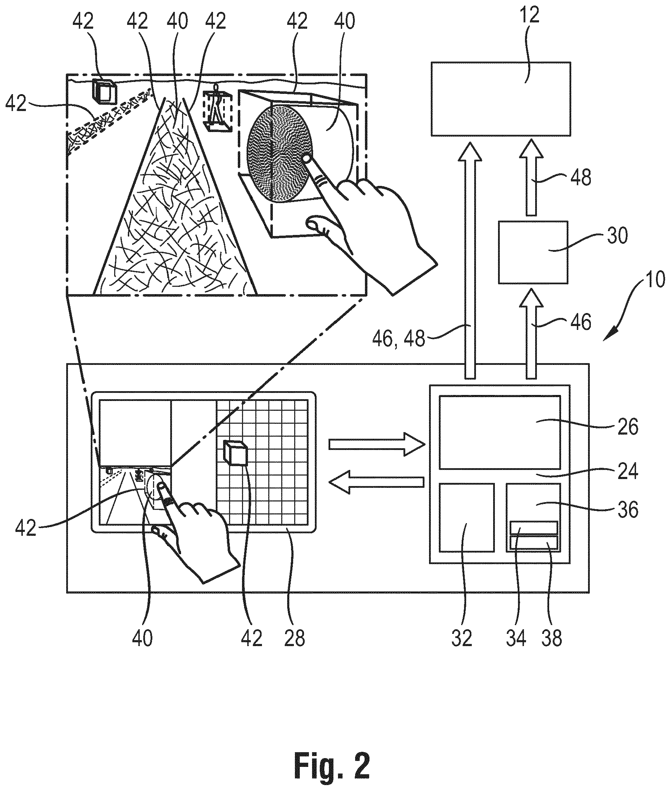

In fig. 2 a schematic view of the operating system 10 is illustrated. The stereo camera 26 of the three-dimensional imaging device 24 captures a real object in form of a swath and a round bale in front of the agricultural vehicle 12. The three-dimensional imaging device 24 comprises a processing unit 32 for deriving a three-dimensional data set for the captured real object in form of the swath and the round bale for example. The captured real object is visualised for display on the touch sensitive display unit 28. Visualising means processing the captured information from the three-dimensional imaging device 24 into a displayable and visually recognisable form for an operator of the operating system 10.

The three-dimensional data set may be compared with reference data 34 stored in a memory unit 36 of the three-dimensional imaging device 24. If the real object is recognised, based on the comparing of the generated three-dimensional data set with the stored reference data 34, object data 38 corresponding to the recognised real object may be allocated to the object. The object data 38 is also stored in the memory unit 36. The object data 38 may comprise additional information about the real object, for example the precise dimensions of the round bale, which may be used for calculating the needed transport capacity to pick all detected bales up. The visualised information of the captured real object is transmitted to the display unit 28 and shown as a displayed object 40 in at least part of the touch sensitive display unit 28 (the displayed live image of the real object is shown enlarged in fig. 2). The displayed object 40 may be a live image and/or video, a synthetic image and/or a virtual element 42. The virtual element 42 may comprise and visualise additional information about a displayed object 40, in this case the boundary lines of the detected swath and security distances around the round bale, wherein in this case the virtual element 42 corresponding to the round bale may be an obstacle warning. The virtual element 42 of the round bale is shown as a cubic frame indicating the round bale. The virtual elements 42 corresponding to the swath are lines indicating the boundaries of the swath. A boundary of a further swath, which is detected but momentarily not followed by the automatic guidance system 22, is indicated by a virtual element 42 in form of a dashed line.

The displayed objects 40 are interactively manipulable by touch input, in particular by predefined input gestures. The virtual element 42 corresponding to the round bale may be selected by touch input, for example with the index finger, and may be enlarged, as safety distance for example, or otherwise interacted with. This touch input is transmitted back to the three-dimensional imaging device 24 as feedback comprising the two-dimensional coordinates of the touch input. If, for example, the operator were to increase the size of the selected displayed object 40 in form of the obstacle warning corresponding to the round bale, the three-dimensional imaging device 24 generates three-dimensional data set based command signals 46 according to the interaction with the displayed object 40 for operating the automatic guidance system 22 accordingly and automatically guide the vehicle around the obstacle. The control commands 46 may be sent to the control unit 28 of the agricultural vehicle 12, in order to control and guide the agricultural vehicle 12 accordingly, for example steering the agricultural vehicle according to the desired input. Thus, control commands 46 may be commands for operating the agricultural vehicle 12 in a certain way, in particular chronologically independent from the touch input. A special type of command signals 46 are control signals 48, generated to directly control at least one actuator, for example of the steering system of the agricultural vehicle, for controlling, i.e. steering, the agricultural vehicle 12 directly. The control signals 48 may be generated by the control unit 30 and/or the three-dimensional imaging device 24, in particular the processing unit 32 of the three-dimensional imaging device 24. In the case of the obstacle in form of a round bale, the dragging of the corresponding virtual element 42 could, according to the input gesture, result in the agricultural vehicle 12 being steered in real time to follow the interaction with the displayed object 40, which may be a location to drive to, in form of a touch input on the display unit 28.

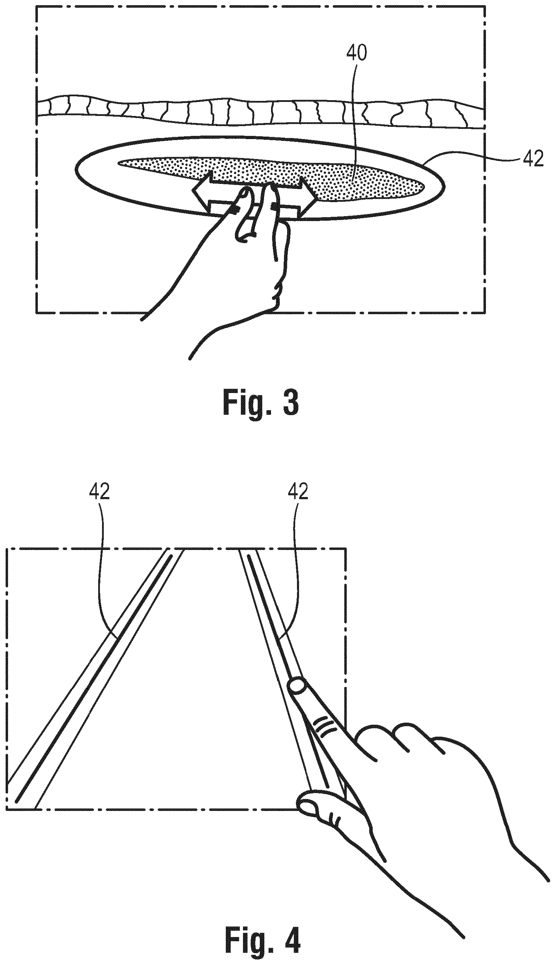

The selecting of a displayed object 40 in form of a pond is shown in fig. 3. The pond is an obstacle which is selected by interacting with the displayed object 40, representing the pond, for example by increasing the allocated virtual element 42 indicative of a safety distance to be considered around the pond. The touch input is transmitted to the three-dimensional imaging device 24 which generates control commands 46 for positioning the agricultural vehicle 12 accordingly in order to navigate safely around the pond.

The selecting and altering of virtual elements 42 representing a track on which the agricultural vehicle is to be steered is shown in fig. 4. According to the recognised track lines are shown as virtual elements 42, indicating the tracks which the operating system 10 has detected. The lines may be repositioned by selecting and dragging the virtual elements 42 into a more precise position. Thus, the precision of the automatic guidance system may be increased efficiently by the operator of the agricultural vehicle.

The particular combinations of elements and features in the above detailed embodiments are exemplary only; the interchanging and substitution of these teachings with other teachings in this disclosure are also expressly contemplated. As those skilled in the art will recognise, variations, modifications, and other implementations of what is described herein can occur to those of ordinary skill in the art without departing from the scope of the invention as claimed. Accordingly, the foregoing description is by the way of example only and is not intending as limiting. In the claims, the wording "comprising" does not exclude other elements or steps, and the identified article "a" or "an" does not exclude a plurality. The mere fact that certain measures are recited in mutually different dependent claims does not indicate that a combination of these measures cannot be used to advantage. The inventions scope is defined in the following claims. Furthermore, reference signs used in the description and claims do not limit the scope of the invention as claimed.

### List of reference signs

- 10: Operating system
- 12: agricultural vehicle
- 14: header
- 16: cabin
- 18: transfer device
- 20: flap
- 22: automatic guidance system
- 24: three-dimensional imaging device
- 26: stereo camera
- 28: display unit
- 30: control unit
- 32: processing unit
- 34: reference data
- 36: memory unit
- 38: object data
- 40: displayed object
- 42: virtual element
- 46: command signal
- 48: control signal

## Claims

1. Operating system for operating an automatic guidance system (22) of an agricultural vehicle (12), comprising
at least one three-dimensional imaging device (24) for capturing a real object and for deriving a three-dimensional data set for the real object, and a touch-sensitive display unit (28) for displaying an object (40,42) and for receiving a touch input, **characterised in that**
the operating system (10) is configured for generating three-dimensional data set based command signals (46) corresponding to the interaction with the displayed object (40) for operating the automatic guidance system (22), whereby the interaction with the displayed object (40) is initiated by manipulating the displayed object by hand, in particular with at least one finger by touch input.

2. Operating system according to claim 1, wherein the operating system is further configured for generating command signals (46) in form of control signals (48) for directly controlling the agricultural vehicle (12).

3. Operating system according to claim 1 or 2, wherein the system is further configured for recognising a captured real object.

4. Operating system according to any of the previous claims, wherein the system is further configured for allocating and/or changing data corresponding to a displayed object (40).

5. Operating system according to any of the previous claims, wherein the system is further configured for generating a visual and/or audible feedback, in particular to a touch input.

6. Operating system according to any of the previous claims, wherein the system is further configured for generating at least one virtual element (42) corresponding to a displayed object (40).

7. Operating system according to any of the previous claims, wherein the three-dimensional imaging device (24) comprises at least one electro-optical range imaging device, in particular in form of a stereo camera (26), a light detection and ranging device, and/or a time-of-flight camera.

8. Agricultural vehicle comprising at least one operating system (10) according to any of the claims 1 to 7.

9. A method of interactively operating, in particular by means of an operating system (10) according to claims 1 to 7, an automatic guidance system (22), of an agricultural vehicle (12), comprising the steps of
- deriving a three-dimensional data set for a real object captured by a three-dimensional imaging device (24),
- displaying the object on a touch-sensitive display unit (28),
- receiving feedback from the display unit (28) from touch input interaction with the displayed object (40),
- generating three-dimensional data set based command signals (46) corresponding to the interaction with the displayed object (40) for operating the automatic guidance system (22), whereby the interaction with the displayed object (40) is initiated by manipulating the displayed object by hand, in particular with at least one finger by touch input . 11

10. Method according to claim 9, further comprising the step of generating command signals (46) in form of control signals (48) for directly controlling the agricultural vehicle (12).

11. Method according to claim 9 or 10, further comprising the step of recognising a captured real object.

12. Method according to any of the claims 9 to 11, further comprising the step of storing and/or retrieving reference data (34), in particular for comparing a derived three-dimensional data set with reference data (34).

13. Method according to any of the claims 9 to 12, further comprising the step of allocating and/or changing data (34,38) corresponding to a displayed object (40).

14. Method according to any of the claims 9 to 13, further comprising the step of generating a visual and/or audible feedback, in particular to a touch input.

15. Method according to any of the claims 9 to 14, further comprising the step of generating at least one virtual element (42) corresponding to a displayed object.

16. Method according to any of the claims 9 to 15, further comprising the step of selecting a displayed object for tracking the corresponding real object.

17. Method according to any of the claims 9 to 16, further comprising the step of transferring three-dimensional data sets to a further system.

## Patentansprüche

1. Bediensystem zum Betreiben eines automatischen Lenksystems (22) eines landwirtschaftlichen Fahrzeugs (12), umfassend
mindestens eine dreidimensionale Abbildungseinrichtung (24) zum Erfassen eines realen Objekts und zum Ableiten eines dreidimensionalen Datensatzes für das reale Objekt, und eine berührungsempfindliche Anzeigeeinheit (28) zum Darstellen eines Objekts (40, 42) und zum Empfangen einer Berührungseingabe, **dadurch gekennzeichnet, dass**
das Betriebssystem (10) zum Erzeugen von dreidimensionalen datensatzbasierten Befehlssignalen (46) entsprechend der Interaktion mit dem angezeigten Objekt (40) zum Betreiben des automatischen Führungssystems (22) konfiguriert ist, wobei die Interaktion mit dem angezeigten Objekt (40) durch Manipulation des angezeigten Objekts mit der Hand, insbesondere mit mindestens einem Finger durch Berührungseingabe, initiiert wird.

2. Betriebssystem nach Anspruch 1, wobei das Betriebssystem ferner zur Erzeugung von Befehlssignalen (46) in Form von Steuersignalen (48) zur direkten Steuerung des landwirtschaftlichen Fahrzeugs (12) ausgebildet ist.

3. Betriebssystem nach Anspruch 1 oder 2, wobei das System ferner zur Erkennung eines erfassten realen Objekts konfiguriert ist.

4. Betriebssystem nach einem der vorhergehenden Ansprüche, wobei das System ferner dazu eingerichtet ist, einem angezeigten Objekt (40) entsprechende Daten zuzuordnen und/oder zu verändern.

5. Betriebssystem nach einem der vorhergehenden Ansprüche, wobei das System ferner dazu eingerichtet ist, eine optische und/oder akustische Rückmeldung, insbesondere auf eine Berührungseingabe, zu erzeugen.

6. Betriebssystem nach einem der vorangehenden Ansprüche, wobei das System ferner so konfiguriert ist, dass es mindestens ein virtuelles Element (42) erzeugt, das einem angezeigten Objekt (40) entspricht.

7. Betriebssystem nach einem der vorhergehenden Ansprüche, wobei die dreidimensionale Abbildungseinrichtung (24) mindestens eine elektrooptische Entfernungsabbildungseinrichtung, insbesondere in Form einer Stereokamera (26), einer Lichtdetektions- und Entfernungsmesseinrichtung und/oder einer Flugzeitkamera, umfasst.

8. Landwirtschaftliches Fahrzeug mit mindestens einem Bediensystem (10) nach einem der Ansprüche 1 bis 7.

9. Verfahren zur interaktiven Bedienung, insbesondere mittels eines Betriebssystems (10) nach einem der Ansprüche 1 bis 7, eines automatischen Lenksystems (22) eines landwirtschaftlichen Fahrzeugs (12), umfassend die Schritte
- Ableitung eines dreidimensionalen Datensatzes für ein reales Objekt, das von einem dreidimensionalen Abbildungsgerät (24) erfasst wurde,
- Anzeige des Objekts auf einer berührungsempfindlichen Anzeigeeinheit (28),
- Empfangen von Rückmeldungen von der Anzeigeeinheit (28) aus der Berührungseingabe-Interaktion mit dem angezeigten Objekt (40),
- Erzeugen von auf dreidimensionalen Datensätzen basierenden Befehlssignalen (46), die der Interaktion mit dem angezeigten Objekt (40) entsprechen, zum Betreiben des automatischen Führungssystems (22), wobei die Interaktion mit dem angezeigten Objekt (40) durch Manipulation des angezeigten Objekts mit der Hand, insbesondere mit mindestens einem Finger durch Berührungseingabe, eingeleitet wird.

10. Verfahren nach Anspruch 9, das ferner den Schritt der Erzeugung von Befehlssignalen (46) in Form von Steuersignalen (48) zur direkten Steuerung des landwirtschaftlichen Fahrzeugs (12) umfasst.

11. Verfahren nach Anspruch 9 oder 10, das ferner den Schritt des Erkennens eines erfassten realen Objekts umfasst.

12. Verfahren nach einem der Ansprüche 9 bis 11, ferner umfassend den Schritt des Speicherns und/oder Abrufens von Referenzdaten (34), insbesondere zum Vergleich eines abgeleiteten dreidimensionalen Datensatzes mit Referenzdaten (34).

13. Verfahren nach einem der Ansprüche 9 bis 12, umfassend ferner den Schritt des Zuordnens und/oder Änderns von Daten (34, 38), die einem angezeigten Objekt (40) entsprechen.

14. Verfahren nach einem der Ansprüche 9 bis 13, umfassend ferner den Schritt des Erzeugens einer visuellen und/oder akustischen Rückmeldung, insbesondere auf eine Berührungseingabe.

15. Verfahren nach einem der Ansprüche 9 bis 14, das ferner den Schritt des Erzeugens mindestens eines virtuellen Elements (42) umfasst, das einem angezeigten Objekt entspricht.

16. Verfahren nach einem der Ansprüche 9 bis 15, das ferner den Schritt der Auswahl eines angezeigten Objekts zur Verfolgung des entsprechenden realen Objekts umfasst.

17. Verfahren nach einem der Ansprüche 9 bis 16, das ferner den Schritt des Übertragens dreidimensionaler Datensätze an ein weiteres System umfasst.

## Revendications

1. Système d'exploitation pour faire fonctionner un système de guidage automatique (22) d'un véhicule agricole (12), comprenant :
au moins un dispositif d'imagerie tridimensionnelle (24) pour capturer un objet réel et pour produire un ensemble de données tridimensionnelles pour l'objet réel, et une unité d'écran tactile (28) pour afficher un objet (40, 42) et pour recevoir une entrée tactile,
**caractérisé en ce que** le système d'exploitation (10) est configuré pour générer des signaux d'ordre (46) basés sur un ensemble de données tridimensionnelles correspondant à l'interaction avec l'objet affiché (40) pour faire fonctionner le système de guidage automatique (22), dans lequel l'interaction avec l'objet affiché (40) est amorcée en manipulant l'objet affiché à la main, en particulier avec au moins un doigt par entrée tactile.

2. Système d'exploitation selon la revendication 1, dans lequel le système d'exploitation est configuré en outre pour générer des signaux d'ordre (46) sous forme de signaux de commande (48) pour commander directement le véhicule agricole (12).

3. Système d'exploitation selon la revendication 1 ou 2, dans lequel le système est configuré en outre pour reconnaître un objet réel capturé.

4. Système d'exploitation selon l'une quelconque des revendications précédentes, dans lequel le système est configuré en outre pour allouer et/ou modifier des données correspondant à un objet affiché (40).

5. Système d'exploitation selon l'une quelconque des revendications précédentes, dans lequel le système est configuré en outre pour générer un retour visuel et/ou audible, en particulier en réponse à une entrée tactile.

6. Système d'exploitation selon l'une quelconque des revendications précédentes, dans lequel le système est configuré en outre pour générer au moins un élément virtuel (42) correspondant à un objet affiché (40).

7. Système d'exploitation selon l'une quelconque des revendications précédentes, dans lequel le dispositif d'imagerie tridimensionnelle (24) comprend au moins un dispositif d'imagerie du domaine électro-optique, en particulier sous forme de caméra stéréoscopique (26), de dispositif de détection et télémétrie par la lumière, et/ou de caméra temps de vol.

8. Véhicule agricole comprenant au moins un système d'exploitation (10) selon l'une quelconque des revendications 1 à 7.

9. Procédé de mise en oeuvre interactive, notamment au moyen d'un système d'exploitation (10) selon les revendications 1 à 7, d'un système de guidage automatique (22) d'un véhicule agricole (12), comprenant les étapes suivantes :
- produire un ensemble de données tridimensionnelles pour un objet réel capturé par un dispositif d'imagerie tridimensionnelle (24),
- afficher l'objet sur une unité d'écran tactile (28),
- recevoir un retour de l'unité d'écran (28) à partir d'une interaction d'entrée tactile avec l'objet affiché (40),
- générer des signaux d'ordre (46) basés sur un ensemble de données tridimensionnelles correspondant à l'interaction avec l'objet affiché (40) pour faire fonctionner le système de guidage automatique (22), dans lequel l'interaction avec l'objet affiché (40) est amorcée en manipulant l'objet affiché à la main, en particulier avec au moins un doigt par entrée tactile.

10. Procédé selon la revendication 9, comprenant en outre l'étape consistant à générer des signaux d'ordre (46) sous forme de signaux de commande (48) pour commander directement le véhicule agricole (12).

11. Procédé selon la revendication 9 ou 10, comprenant en outre l'étape consistant à reconnaître un objet réel capturé.

12. Procédé selon l'une quelconque des revendications 9 à 11, comprenant en outre l'étape consistant à stocker et/ou récupérer des données de référence (34), en particulier pour comparer un ensemble de données tridimensionnelles produit avec des données de référence (34).

13. Procédé selon l'une quelconque des revendications 9 à 12, comprenant en outre l'étape consistant à allouer et/ou modifier des données (34, 38) correspondant à un objet affiché (40).

14. Procédé selon l'une quelconque des revendications 9 à 13, comprenant en outre l'étape consistant à générer un retour visuel et/ou audible, en particulier en réponse à une entrée tactile.

15. Procédé selon l'une quelconque des revendications 9 à 14, comprenant en outre l'étape consistant à générer au moins un élément virtuel (42) correspondant à un objet affiché.

16. Procédé selon l'une quelconque des revendications 9 à 15, comprenant en outre l'étape consistant à sélectionner un objet affiché pour suivre l'objet réel correspondant.

17. Procédé selon l'une quelconque des revendications 9 à 16, comprenant en outre l'étape consistant à transférer des ensembles de données tridimensionnelles vers un autre système.
